# EUROPÄISCHE PATENTANMELDUNG

(11) **EP 2 123 736 A1**
(43) Veröffentlichungstag der Anmeldung: **25.11.2009**
(21) Anmeldenummer: 08009246.3
(22) Anmeldetag: 19.05.2008
(51) Int. Cl.: C10L 1/04, C10L 1/08, C07C 1/24, C10G 3/00, C10G 50/00, C10G 63/00

(54) **Verfahren zur Herstellung von Dieselkraftstoffen und Flugzeugtreibstoffen aus C1-C5-Alkoholen**

(71) Anmelder: C.E.-Technology Limited, Brinkwater Glen Auldyn, Lezayre Isle of Man IM7 2AQ (GB)
(72) Erfinder: Feyertag, Dieter, 9020 Klagenfurt (AT); Hyman, Richard J., Narn IV12 5QH (GB); Auerbach, Paul X.C.R.M., London SW20 0NT (GB); Ecker, Alfred, Dr., 1180 Wien (AT)
(74) Vertreter: Andrae, Steffen

(57) **Zusammenfassung**

Verfahren zur Herstellung eines Dieselkraftstoffes unter Verwendung eines Einsatzprodukts in Form von C1 - C5 Alkoholen, die ganz oder teilweise biogener Herkunft sein können, bei dem aus einem wenigstens teilweise durch Dehydratisierung von C1 - C5 Alkoholen erhaltenen Olefinenkohlenwasserstoffgemisch mit einem Anteil an ungeraden Olefinen und Isoolefinen von mindestens 40 Masse-% ein synthetischer Kohlenwasserstoff mit einem Isoparaffin-Anteil von mindestens 65 Masse-% oligomerisiert bzw. polymerisiert wird und nach einer nachfolgenden Hydrierung und Rektifikation ein Dieselkraftstoff mit einem Cold Filter Plugging Point gleich oder weniger 0 °C, insbesondere - 20 °C oder tiefer, abgenommen wird.

Bei einer entsprechenden Herstellung eines Flugzeugtreibstoffs mit einen Freezing Point von -47 °C oder tiefer beträgt der genannte Anteil an ungeraden Olefinen und Isoolefinen mindestens 50 Masse-%, und der genannte Isoparaffin-Anteil 75 Masse-%.

## Beschreibung

Die vorliegende Erfindung betrifft das Gebiet der Herstellung und Verwendung von flüssigen Kraftstoffen, insbesondere von solchen vom Typ Dieselkraftstoff und von solchen vom Typ Flugzeugtreibstoff.

Angesichts sich verknappender Ressourcen und einem generellen Bestreben, Kraftstoffe aus fossilen Quellen durch solche biologischer Herkunft zu ersetzen, besteht ein großes Interesse an einer Verbreiterung der Rohstoffbasis für biologische Kraftstoffe aller Art und an einer Erweiterung der Produktpalette, um flexibel auf Veränderungen der Angebots- und Bedarfssituation auf dem Weltmarkt reagieren zu können und Mangelsituationen bei herkömmlichen Kraftstoffen durch neuartige Kraftstoffe auf biologischer Basis ausgleichen zu können.

Zu den Kraftstoffen, für die ein Interesse an der Erschließung neuartiger Rohstoffquellen und Verfahren besteht, die qualitativ hochwertige Alternativkraftstoffe liefern können, gehören Dieselkraftstoffe und auch Flugzeugtreibstoffe. Die vorliegende Erfindung betrifft die Bereitstellung derartiger Kraftstoffe unter wenigstens teilweisem Einsatz von Rohstoffen bzw. Halbprodukten, die aus biologischen Materialien erzeugt werden können.

In der europäischen Patentanmeldung EP 1 908 815 A2 (07007547.8), auf deren Inhalt in seiner Gesamtheit die vorliegende Anmeldung ausdrücklich Bezug nimmt, offenbaren die gleichen Erfinder bereits Kraftstoffmischungen aus Fettsäureestern (Methyl- und/oder Ethylestern) und synthetischen Kohlenwasserstoffen mit hohem Isoparaffin-Anteil.

In der Anmeldung EP 1 908 815 A2 wird auf den Seiten 12 und 13 ausführlich dargelegt, wie der Isoparaffin-Anteil der synthetischen Kohlenwasserstoffe das Kälteverhalten von Kraftstoffen positiv beeinflusst (wobei Isoparaffine die Cetanzahl der Kraftstoffe nicht so negativ beeinträchtigen wie es z.B. Cycloparaffine tun). Es wird daher vorgeschlagen, gezielt Kraftstoffe mit spezifischen, besonders vorteilhaften Anteilen an Isoparaffinen herzustellen und in Kraftstoffmischungen einzusetzen.

Obwohl es grundsätzlich möglich ist, den Anteil an Isoparaffinen in Kohlenwasserstoffgemischen durch Isomerisierung oder Cracken zu erhöhen, werden Kohlenwasserstoffkomponenten mit einem Hauptanteil an Isoparaffinen aus wirtschaftlichen Gründen vorzugsweise durch Oligomerisierung (bzw. Polymerisierung) von Olefinen erzeugt.

Die in den Prozess der Oligomerisierung eingesetzten Olefine können aus verschiedenen Quellen stammen. Sie können mittels eines Fischer-Tropsch-Verfahrens erhalten werden. Sie können aber auch aus anderen Verfahren stammen.

So haben die Erfinder im Kontext eines Verfahrens zur Erzeugung von Flugzeugtreibstoffen aus Biomasse ein Verfahren entwickelt, mit dem Kohlenwasserstoffgemische mit einem Anteil an Isoparaffinen im benötigten Bereich hergestellt werden können, das die folgenden Verfahrensschritte umfasst:
1) In einem ersten Schritt werden aus Biomasse durch Fermentation (z.B. US2007/031954 oder CA2213233), oder gegebenenfalls durch Umwandlung von Biogas in Synthesegas und dessen katalytische Weiterverarbeitung, C1 - C5 Alkohole (Propanol, Ethanol, Methanol, Butanol, Pentanol) erzeugt, die ein erstes Zwischenprodukt darstellen.
2) Diese Alkohole werden in einem zweiten Verfahrensschritt einzeln oder im Gemisch zu Olefinen dehydratisiert. Für die zweite Verfahrensstufe können z.B. feste Katalysatoren auf Basis von Aluminiumoxid oder kombinierten Oxiden (Al, Zr) verwendet werden. Verschiedene Wege zur Dehydratisierung von z.B. Ethanol zu Ethylen werden u.a. in US 4396789, WO2007/134415, EP 1790627, WO2007/063281, EP 0340061 und CN 1884232 beschrieben. Es können aber auch Methylester über einen Zeolith-Katalysator zu Olefinen dehydratisiert werden (US2007/032899 oder EP 1289912). Wichtig ist es im Zusammenhang des beschriebenen Verfahrens insbesondere, dass bei der Dehydratisierung mindestens 50 Masse-% ungeradzahlige Olefine (z.B. Propylen) und Isoolefine erhalten werden.
3) Die erzeugten Olefine werden dann nach an sich bekannten Verfahren (WO2006/069406, US2003/171632, US4417088, US4990709) polymerisiert bzw. oligomerisiert. Hierbei gewährleistet der oben erwähnte Anteil von mindestens 50 Masse-% an ungeradzahligen Olefinen und Isoolefinen im Olefingemisch, dass im resultierenden Kohlenwasserstoffgemisch ein ausreichender Anteil an Isoparaffinen (für eine Verwendung in Flugzeugtreibstoffen mindestens 75 %) erhalten wird.
4) Dieses Kohlenwasserstoffgemisch wird zwecks Absättigung restlicher Doppelbindungen und Entfernung störender Verbindungen (z.B. Aromaten) hydriert. Bei dieser Hydrierung werden auch die restlichen Olefine aus dem Kohlenwasserstoffgemisch entfernt. Das ist wichtig, da diese sonst die Oxidationsstabilität des hergestellten Kraftstoffes negativ beeinträchtigen würden. Nach der Hydrierung enthält das Kohlenwasserstoffgemisch somit weniger als 0,1 Masse-% Mehrkernaromaten und weniger als 0,1 Masse-% Olefine.
5) Anschließend wird das erhaltene Kohlenwasserstoffgemisch durch Destillation aufgetrennt, wobei die Fraktion mit einem Siedebeginn ab 150°C und einem Siedeende bis 300 °C als Flugzeugturbinentreibstoff mit einem Gefrierpunkt (Freezing Point) von -47 °C oder tiefer aus der Fraktionierkolonne abgenommen wird.

Die Erfinder haben nunmehr festgestellt, dass bei einer sachgerechten Abwandlung des in der Anmeldung gemäß EP 1 908 815 beschriebenen Verfahrens auf vorteilhafte Weise aus z.B. Biomethanol auch ein völlig biogener Dieselkraftstoff (B100) erzeugt werden kann.

Es ist dazu allerdings erforderlich, die Siedelage der Fraktionierkolonne etwas anders einzustellen: Ein Siedebeginn ab 160 °C und ein Siedeende bis 370 °C ergibt einen Dieselkraftstoff von Winterqualität mit einem Cold Filter Plugging Point (CFPP) von -20 °C oder tiefer. Durch Erhöhung des Siedebeginns auf bis zu 220 °C lässt sich aber auch Dieselkraftstoff der Sommer- und Zwischensaisonqualitäten, mit einem CFPP von 0 °C bis -15 °C, erzeugen.

Auch aus Bioethanol kann ein solcher Biodiesel (B100) über diesen Verfahrensweg hergestellt werden. Es ist dazu allerdings ein zusätzlicher Zwischenschritt erforderlich, mit dem das Bioethylen in ungeradzahlige Olefine umgewandelt werden kann. Das ist durch Metathese (vgl. WO2006/052688) des Bioethylens mit einem (ebenfalls durch vorherige Dehydratisierung erzeugten) Biobutylen möglich, um so die notwendige Proportion an ungeradzahligen Olefinen bzw. Isoolefinen im Olefingemisch zu gewährleisten.

Ein energetischer Vorteil des beschriebenen Verfahrens beruht auf der thermischen Komplementarität der individuellen Prozess-Stufen: Die bei der exothermen Oligomerisierung freigesetzte Wärmeenergie kann bei dem vorhergehenden endothermen Dehydratisierungsprozeß genutzt werden.

Unter der Voraussetzung, dass wasserverträgliche Katalysatoren, z.B. großporige Zeolithkatalysatoren, eingesetzt werden, können ferner die Verfahrensschritte der Dehydratisierung und Oligomerisierung in sehr vorteilhafter Weise zusammengelegt werden, d.h. die Dehydratisierung der Alkohole und die Oligomerisierung der bei der Dehydratisierung entstandenen Olefine kann in einer Verfahrensstufe am gleichen Katalysator ablaufen.

US 4467133 offenbart bereits die Umwandlung von Alkoholen und Ethern in Kohlenwasserstoffdestillate, wobei als mögliche Produkte auch Dieselkraftstoffe genannt werden. Eine Prüfung der gemäß dem genannten Patent durchgeführten Verfahrensschritte und der Eigenschaften der dabei erhältlichen Produkte ergibt jedoch, dass keine Produkte erhalten worden sein können, die nach europäischem Verständnis als Dieselkraftstoffe anzusehen wären. Bei den erhaltenen Produkten handelte es sich bestenfalls um Ottokraftstoffe. Der Grund ist, dass bei dem Verfahren gemäß US 4467133 der Verfahrensschritt der Hydrierung fehlt, der notwendig ist, um die restlichen Olefine aus dem Kohlenwasserstoffgemisch zu entfernen. Daher kann gemäß US 4467133 nie ein Dieselkraftstoff mit einer Oxidationsstabilität erzeugt werden, die den europäischen Normen entspricht. Wie die Nachfolgeanmeldung EP 0 649 394 folgerichtig ausführt, wird das in US 4467133 beschriebene Verfahren deswegen am besten dazu herangezogen, Alkohole zu Olefinen zu dehydratisieren (bzw. sie zu oligomerisieren), jedoch niemals, um daraus auch einen Dieselkraftstoff als Endprodukt herzustellen. Wegen der fehlenden Hydrierung enthält das nach US 4467133 erzeugte Kohlenwasserstoffgemisch gegebenenfalls sogar noch über 70% Olefine, wie Beispiel 20 von US 4025575 zeigt.

Aus diesem Grund offenbart US 4467133 (i) keine Anforderungen an das Kälteverhalten eines Dieselkraftstoffes, (ii) nennt folglich auch keine erforderlichen Mindestanteile an Isoparaffinen in dem zu Grunde liegenden Kohlenwasserstoffgemisch, und (iii) schreibt somit auch keinen Mindestanteil an ungeraden Olefinen bzw. Isoolefinen im bei der Dehydratisierung erzeugten Olefingemisch vor. US 4467133 nennt daher auch keine Siedelage für die Fraktionierung durch Destillation des Kohlenwasserstoffgemisches.

Die Offenbarung von US 4467133 entspricht insoweit typischen US-Patentanmeldungen, in denen die Besonderheiten von Dieselkraftstoffen kaum angesprochen werden: In WO00/11117A wird eine ganze Patentanmeldung dem Thema gewidmet, wie man die Oxidationsstabilität von nach Fischer-Tropsch-Verfahren hergestellten Dieselkraftstoffen verbessern kann. Für derartige Dieselkraftstoffe wird somit vorausgesetzt, dass sie normalerweise nicht oxidationsstabil sind.

Dieselkraftstoffe, wie sie gemäß der vorliegenden Erfindung hergestellt werden, bedürfen jedoch keiner solcher Stabilitätsverbesserung, weil sie sich sowieso, aufgrund der Verfahrensführung, schon durch eine normgerechte Oxidationsstabilität auszeichnen.

Die inadäquate Behandlung von Dieselkraftstoffen in Patentanmeldungen aus den USA ist zurückzuführen auf den höheren Benzinanteil im gesamten amerikanischen Kraftstoffverbrauch, im Vergleich zu z.B. Europa, wo Dieselkraftstoffe eine verhältnismäßig viel wichtigere Rolle spielen. Demzufolge sind die Anforderungen, die laut geltenden Industrienormen an europäischen Dieselkraftstoffen gestellt werden, viel strenger als die in Amerika: Die europäische Norm für Dieselkraftstoff EN590 definiert ein Maximum von 25 g/m³ an unlöslichen Substanzen im Dieselkraftstoff, während die europäische Norm für Biodieselkraftstoff EN14214 eine das Oxidationsverhalten kennzeichnende Induktionsperiode von mindestens 6 Stunden (gemessen nach der Rancimat-Methode bei 110 °C)vorschreibt. Weder die amerikanische Norm für Dieselkraftstoffe (ASTM D975), noch die amerikanische Norm für Biodieselkraftstoffe (ASTM D6751) enthalten irgendwelche Anforderungen bezüglich Oxidationsstabilität. Bei zunehmendem Dieselverbrauch und steigendem Umweltbewusstsein wird jedoch auch in Amerika kein Weg an strengeren Vorschriften vorbeiführen, wobei die vom amerikanischen Militär aufgestellten Standards für Diesel- und BiodieselKraftstoffe (CID-A-A-59693A) ein erster Vorstoß in diese Richtung sind.

Wie Beispiel 1a auf Seite 4 von US 4467133 zeigt, sieht dieses Patent überhaupt keine Hydrierung vor. Die Olefine verbleiben daher im Diesel und verschlechtern damit die Stabilität. Dies entspricht nicht einmal der amerikanischen Praxis, wo üblicherweise eine minimale Hydrierung vorgenommen wird, um wenigstens den Schwefelgehalt der erzeugten Kraftstoffe zu senken. Diese minimale Hydrierung ist aber noch lange keine Hydrierung unter schärferen Bedingungen, wie sie in Europa üblich ist, bei der bereits teilweise in die molekulare Struktur des Kohlenwasserstoffgemisches eingegriffen wird, um so unter anderem eine akzeptable Oxidationsstabilität herbeizuführen. Da es sich bei der erfindungsgemäß in der vierten Verfahrensstufe durchgeführten Hydrierung um eine Hydrierung zur Absättigung der störenden Olefine und anderer Fremdsubstanzen handelt, wobei Olefine weitestgehend aus dem Kohlenwasserstoffgemisch entfernt werden (d.h. bis ihr Anteil weniger als 0,1 Masse-% des Gemischs ausmacht), erfüllen die mittels anschließender Destillation erfindungsgemäß erzeugten Dieselkraftstoffe sowohl die Kriterien laut EN590 (d.h. weniger als 25 g/m³ an unlöslichen Substanzen) als auch die laut EN14214 geforderte Oxidationsstabilität(Induktionsperiode länger als 6 Stunden, bei 110 °C).

Um die hohe Abhängigkeit der Industrieländer von Rohölimporten und die Belastung der Umwelt durch das Treibhausgas Kohlendioxid aus der Verbrennung von Kohlenwasserstoffen aus fossilen Rohstoffen zu verringern, wird weltweit nach alternativen Energieträgern gesucht, die regenerativ und umweltschonend sind. Das Problem dabei ist, dass unzureichend regenerative Rohstoffe, wie z.B. Biopropanol, Biomethanol oder Biobutylen vorhanden sind.

Der einzige biogene Rohstoff, der im Moment in halbwegs ausreichendem Ausmaß zur Verfügung steht, ist Bioethanol. Das erfindungsgemäße Verfahren ermöglicht u.a. die Umwandlung von Bioethanol in einen Dieselkraftstoff, der die europäischen Normen für einen solchen Kraftstoff erfüllt.

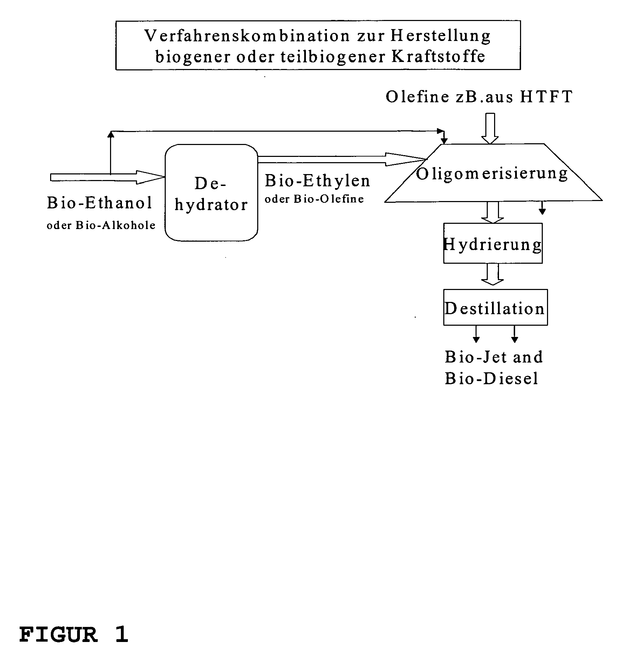

In dem Verfahrensfließbild gemäß Figur 1 wird grafisch dargelegt, wie gemäß der vorliegenden Erfindung die z.B. nach der obigen Methode aus Alkoholen, z.B. aus (Bio-)Ethanol, hergestellten Olefine, allein oder in vorteilhafter Weise auch gemeinsam mit z.B. den nach dem Fischer-Tropsch-Verfahren (z.B. nach dem High Temperature Fischer-Tropsch-Verfahren; HTFT-Verfahren) erzeugten (fossilen) Olefinen, z.B. hergestellt gemäß WO2006/069406, oligomerisiert und anschließend zu Dieselkraftstoff oder Flugzeugtreibstoff hydriert und destilliert werden können.

Bei der in Figur 1 gezeigten Kombination von Verfahrensschritten kann dabei, wie bereits angesprochen, die Dehydratisierung des Ethanols entweder in einem eigenen separaten Verfahrensschritt vor der Oligomerisierungsstufe erfolgen, oder sie kann (abhängig von der Wasserverträglichkeit der eingesetzten Katalysatoren) in vorteilhafter Weise in einer gemeinsamen Stufe auch gleichzeitig mit der Oligomerisierung der durch das HTFT-Verfahren erzeugten (fossilen) Olefine ablaufen, indem in dieser Stufe auch die parallel erzeugten Olefine aus Alkoholen unmittelbar mitoligomerisiert werden.

Das Resultat des obigen erfindungsgemäßen Verfahrens sind Kraftstoffe, die wenigstens zu einem gewissen Teil biogenen Ursprungs sind, wobei die Höhe des biogenen Anteils mittels der Radionuklid-Bestimmungsmethode bestimmbar ist (vgl. die Veröffentlichung von B.A. Buchholz et al., "Using Carbon-14 Isotope Tracing to Investigate Molecular Structure Effects of the Oxygenate Dibutyl Maleate on Soot Emissions from a DI Diesel Engine", in SAE Transactions, Journal of Fuels and Lubricants, 16. Januar 2004, und die darin zitierte Literatur.)

Der erfindungsgemäße Kraftstoff ist gemäß einer bevorzugten Ausführungsform ein Dieselkraftstoff. Um einen Dieselkraftstoff herzustellen, wird die Siedelage der Fraktionierkolonne zwischen einem Siedebeginn von 160 °C (Winterqualität, siehe oben) bis 220 °C (Sommerqualität, siehe oben) und einem Siedeende bis 370 °C eingestellt, um einen normgerechten Dieselkraftstoff mit einem CFPP von weniger oder gleich -20 °C bzw. zwischen 0 °C und -15 °C abzunehmen. Dazu ist es notwendig, dass das zur Destillation gebrachte Kohlenwasserstoffgemisch einen Isoparaffin-Anteil von mindestens 65% aufweist, was wiederum voraussetzt, dass das zur vorhergehenden Oligomerisierung herangezogene Olefingemisch einen Anteil an ungeraden Olefinen und Isoolefinen von mindestens 40% enthielt.

Soll der Kraftstoff ein Flugzeugtreibstoff sein, für den eine besser Kältestabilität gefordert wird, wird die Siedelage der Fraktionierkolonne zwischen 150 °C und 300 °C eingestellt, so dass ein Flugzeugtreibstoff mit einem Freezing Point von weniger als oder gleich -47 °C abgenommen wird. Dazu ist es notwendig, dass das zur Destillation gebrachte Kohlenwasserstoffgemisch einen Isoparaffin-Anteil von mindestens 75% aufweist, was wiederum voraussetzt, dass das zur vorhergehenden Oligomerisierung herangezogene Olefingemisch einen Anteil an ungeraden Olefinen und Isoolefinen von mindestens 50% enthielt.

Während die Patentanmeldung gemäß EP 1 908 815 A2 also (i) Kraftstoffe in Form von Mischungen von Endprodukten aus zwei verschiedenen Verfahren (Biodiesel aus der Umesterung von Ölen plus synthetische Kohlenwasserstoffe auf Basis von z.B. Fischer-Tropsch), sowie (ii) ein Verfahren zur Herstellung von Flugzeugtreibstoffen auf der Basis niedermolekularer Alkohole beschreibt, sieht das erfindungsgemäße Verfahren gemäß einer in Figur 1 dargestellten bevorzugten Ausführungsform vor, die aus C1 - C5 Alkoholen ggf. in situ erzeugten Olefine und die nach einem Fischer-Tropsch-Verfahren erzeugten Olefine gegebenenfalls schon während des Produktionsprozesses zusammen zu führen und gemeinsam zu oligomerisieren.

Es gelingt den Erfindern auf diese Weise, ganz oder wenigstens teilweise biogene Dieselkraftstoffe von überragender Qualität herzustellen (vgl. Eckdaten zu KW2 in Tabelle 2 auf Seite 12 von EP 1 908 815 A2), sowie gewünschtenfalls auch teilweise biogene Flugzeugtreibstoffe von ebenso hohem Standard (vgl.

Eckdaten KW1, Tabelle 2, Seite 12, EP 1 908 815 A2) herzustellen.

Sollten die erfindungsgemäßen Dieselkraftstoffe die europäische Norm EN590 in Sachen Dichte (800 oder 820 bis 845 kg/m³) nicht zur Gänze erfüllen, können sie gegebenenfalls noch mit einem konventionellen Biodieselkraftstoff (z.B. einem Fettsäuremethylester mit einer Dichte zwischen 860 und 900 kg/m³) abgemischt werden.

## Patentansprüche

1. Verfahren zur Herstellung eines Dieselkraftstoffes unter Verwendung eines Einsatzprodukts in Form von C1 - C5 Alkoholen, bei dem aus einem wenigstens teilweise durch Dehydratisierung von C1 - C5 Alkoholen erhaltenen Olefinenkohlenwasserstoffgemisch mit einem Anteil an ungeraden Olefinen und Isoolefinen von mindestens 40 Masse-% ein synthetischer Kohlenwasserstoff mit einem Isoparaffin-Anteil von mindestens 65 Masse-% oligomerisiert bzw. polymerisiert wird und nach einer nachfolgenden Hydrierung und Rektifikation ein Dieselkraftstoff abgenommen wird.

2. Verfahren zur Herstellung eines Dieselkraftstoffes unter Verwendung eines Einsatzprodukts, das wenigstens teilweise aus C1 - C5 Alkoholen besteht, bei dem durch Dehydratisierung der C1 - C5 Alkohole im Einsatzprodukt und gleichzeitige Oligomerisierung des Einsatzprodukts unter Verwendung eines wasserverträglichen Katalysators in einer einzigen Verfahrensstufe ein synthetischer Kohlenwasserstoff mit einem Isoparaffin-Anteil von mindestens 65 Masse-% erzeugt wird und nach einer nachfolgenden Hydrierung und Rektifikation ein Dieselkraftstoff abgenommen wird.

3. Dieselkraftstoff, erhalten nach einem Verfahren gemäß Anspruch 1 oder Anspruch 2, der einen Cold Filter Plugging Point von gleich oder weniger als 0 °C, insbesondere von -20 °C oder tiefer, aufweist.

4. Verfahren zur Herstellung eines Dieselkraftstoffes unter Verwendung eines Einsatzprodukts in Form von biogenen C1 - C5 Alkoholen, bei dem aus einem wenigstens teilweise durch Dehydratisierung von biogenen C1 - C5 Alkoholen erhaltenen Olefinenkohlenwasserstoffgemisch mit einem Anteil an ungeraden Olefinen und Isoolefinen von mindestens 40 Masse-% ein synthetischer Kohlenwasserstoff mit einem Isoparaffin-Anteil von mindestens 65 Masse-% oligomerisiert bzw. polymerisiert wird und nach einer nachfolgenden Hydrierung und Rektifikation ein Dieselkraftstoff abgenommen wird, der in seinem Kohlenwasserstoffanteil auf Grund des Einsatzes biogener Rohstoffe bis zu [1,2 * 10⁻¹²] Masse-% des Radionuklids 14C aufweist.

5. Verfahren zur Herstellung eines Dieselkraftstoffes unter Verwendung eines Einsatzprodukts, das wenigstens teilweise aus biogenen C1 - C5 Alkoholen besteht, bei dem durch Dehydratisierung der C1 - C5 Alkohole im Einsatzprodukt und gleichzeitige Oligomerisierung des Einsatzprodukts unter Verwendung eines wasserverträglichen Katalysators in einer einzigen Verfahrensstufe ein synthetischer Kohlenwasserstoff mit einem Isoparaffin-Anteil von mindestens 65 Masse-% erzeugt wird und nach einer nachfolgenden Hydrierung und Rektifikation ein Dieselkraftstoff abgenommen wird, der in seinem Kohlenwasserstoffanteil auf Grund des Einsatzes biogener Rohstoffe bis zu [1,2 * 10⁻¹²] Masse-% des Radionuklids 14C aufweist.

6. Zumindest teilweise biogener Dieselkraftstoff, erhalten nach einem Verfahren gemäß Anspruch 4 oder 5, der einen Cold Filter Plugging Point von gleich oder weniger als 0 °C, insbesondere von -20 °C oder tiefer, aufweist.

7. Verwendung eines Dieselkraftstoffes nach Anspruch 3 oder Anspruch 6 zur Abmischung mit einem herkömmlichen Treibstoff, einem Biodieseltreibstoff, z.B. einem Fettsäuremethylester, oder einem anderen synthetischen Kohlenwasserstoff.

8. Verfahren zur Herstellung eines Flugzeugtreibstoffs unter Verwendung eines Einsatzprodukts in Form von biogenen C1 - C5 Alkoholen, bei dem aus einem teilweise durch Dehydratisierung von biogenen C1 - C5 Alkoholen erhaltenen Olefinenkohlenwasserstoffgemisch mit einem Anteil an ungeraden Olefinen und Isoolefinen von mindestens 50 Masse-% ein synthetischer Kohlenwasserstoff mit einem Isoparaffin-Anteil von mindestens 75 Masse-% oligomerisiert bzw. polymerisiert wird und nach einer nachfolgenden Hydrierung und Rektifikation ein Flugzeugtreibstoff abgenommen wird, der in seinem Kohlenwasserstoffanteil auf Grund des Einsatzes biogener Rohstoffe bis zu [1,2 * 10⁻¹²] Masse-% des Radionuklids 14C aufweist.

9. Verfahren zur Herstellung eines Flugzeugtreibstoffs unter Verwendung eines Einsatzprodukts, das wenigstens teilweise aus C1 - C5 Alkoholen besteht, bei dem durch Dehydratisierung der C1 - C5 Alkohole im Einsatzprodukt und gleichzeitige Oligomerisierung des Einsatzprodukts unter Verwendung eines wasserverträglichen Katalysators in einer einzigen Verfahrensstufe ein synthetischer Kohlenwasserstoff mit einem Isoparaffin-Anteil von mindestens 75 Masse-% erzeugt wird und nach einer nachfolgenden Hydrierung und Rektifikation ein Flugzeugtreibstoff abgenommen wird.

10. Verfahren nach Anspruch 9, bei dem die C1 - C5 Alkohole wenigstens teilweise biogenen Ursprungs sind und der Flugzeugtreibstoff in seinem Kohlenwasserstoffanteil auf Grund des Einsatzes biogener Rohstoffe bis zu [1,2 * 10⁻¹²] Masse-% des Radionuklids 14C aufweist.

11. Flugzeugtreibstoff erhalten nach einem Verfahren gemäß einem der Ansprüche 8, 9 oder 10, der einen Freezing Point von -47 °C oder tiefer, aufweist.

12. Verwendung eines Flugzeugtreibstoffes nach Anspruch 11 zur Abmischung mit einem herkömmlichen Treibstoff oder einem anderen synthetischen Kohlenwasserstoff.
